(19) Europäisches Patentamt
European Patent Office
Office européen des brevets

(11) **EP 1 325 622 B1**

(12) **EUROPEAN PATENT SPECIFICATION**

(45) Date of publication and mention
of the grant of the patent:
**28.02.2007 Bulletin 2007/09**

(51) Int Cl.:
***H04M 19/02*** *(2006.01)*

(21) Application number: **01978482.6**

(22) Date of filing: **15.10.2001**

(86) International application number:
**PCT/FI2001/000893**

(87) International publication number:
**WO 2002/032105 (18.04.2002 Gazette 2002/16)**

(54) **METHOD AND CIRCUIT ARRANGEMENT FOR DETECTING RING TRIP IN A WIRELINE TELEPHONE NETWORK**

VERFAHREN UND SCHALTUNGSANORDNUNG ZUR ERKENNUNG DER RUFABSCHALTUNG IN EINEM DRAHTLOSEN FERNSPRECHNETZWERK

PROCEDE ET DISPOSITIF DE DETECTION D'ARRET DU COURANT D'APPEL DANS UN RESEAU TELEPHONIQUE FILAIRE

(84) Designated Contracting States:
**AT BE CH CY DE DK ES FI FR GB GR IE IT LI LU MC NL PT SE TR**

(30) Priority: **13.10.2000 FI 20002265**

(43) Date of publication of application:
**09.07.2003 Bulletin 2003/28**

(73) Proprietor: **Tellabs Oy**
**02630 Espoo (FI)**

(72) Inventors:
• **KOSKELA, Jari**
**FIN-00510 Helsinki (FI)**
• **HURME, Harri**
**FIN-02100 Espoo (FI)**

(74) Representative: **Brax, Matti Juhani**
**Berggren Oy Ab,**
**P.O. Box 16**
**00101 Helsinki (FI)**

(56) References cited:
**EP-A2- 0 213 342          US-A- 4 370 526**

**Description**

The invention concerns generally the technology of interfacing a switching apparatus with the wireline connection leading to a telephone apparatus. Especially the invention concerns the technology of providing the so-called ring trip indication that indicates answering to a call.

The conventional arrangement in an analogue telephone system is to draw a separate twin cable line to each subscriber device, typically a telephone apparatus. In digital systems it is possible to distribute the capacity represented by the same physical medium to many subscribers, because many telephone calls can be simultaneously transferred in the same line in multiplexed form. If a digital transfer connection is added to an analogue telephone exchange, a circuit that functions as an analogue telephone apparatus for the telephone exchange is needed at the exchange end of the transfer connection. A circuit like this is called an office line interface circuit (OLIC). If the telephone device is analogue, the telephone apparatus end of the transfer connection requires a circuit which makes the digital transfer connection look like an analogue connection to the telephone apparatus. A circuit of the latter kind is called a subscriber line interface circuit (SLIC). The present invention relates to the subscriber line interface circuits.

The on-hook status generally means a status of the telephone system in which the telephone is not in use. The off-hook status in turn means a status of the telephone system in which the telephone handset is lifted from the cradle. A transition from the on-hook status to the off-hook status results from the user of the telephone picking up the handset either when intending to make a call or when answering to a ringing telephone. Of these situations the present invention concerns the latter.

A ring signal is a relatively large amplitude AC voltage signal coupled to the twin cable that leads to a telephone that is to receive a call. Conventional SLICs are arranged in groups that utilise group-specific ring generators. Such a group-specific ring generator can then be coupled to that one of the group's outgoing telephone lines into which a telephone call is to be made. An alternative solution is to use so-called ringing SLICs that are arranged to generate or at least amplify their own ring signals. Ringing SLICs have certain advantages regarding manufacturing cost, modularity in construction, physical size, reliability and performance.

When the handset is picked up at the receiving end, the circuit means that fed the ring signal into the telephone line must provide an indication and cut off the ring signal as fast as possible. The triggering event for these actions, i.e. the incident of detecting that the handset has been picked up, is known as ring trip detection.

A conventional solution for ring trip detection is to keep a DC voltage coupled to the telephone line simultaneously with the ring signal and to monitor whether the DC voltage gives rise to a DC current or not. Picking up the handset closes the so-called hook switch at the telephone, allowing current to flow through the conductor loop consisting of the wires of the twin cable and the hook switch. A simple low-pass filter combined to a current detector makes a reasonably good ring trip detector. A known alternative to the low pass filter and the current detector is to monitor the duty cycle of the ring signal; in the absence of a DC current the duty cycle is exactly 50%, whereas a simultaneous DC current causes it to deviate from this value.

Although the use of a DC voltage component simultaneously with the ring signal makes it relatively easy to provide ring trip indication, there are other reasons that tend to make it more advantageous to isolate the DC source from the telephone line during ringing. At least one solution for implementing ring trip detection completely without an associated DC current is known from the US Patent No. 5,694,465A to Apfel. The idea presented therein is based on monitoring the AC impedance of the telephone line as seen at the SLIC. If the distance along the wire between the SLIC and the telephone apparatus is sufficiently short, the AC impedance of the telephone line is always higher in the on-hook state than in the off-hook state. When the SLIC detects a sudden decrease in the observed AC impedance of the telephone line, it deduces that the handset must have been picked up and provides a ring trip indication. The drawback of this solution is its dependence on the length of the telephone line. For long lines it may happen that the difference in observed AC impedance between on-hook and off-hook states is disturbingly small. If the telephone line is long enough, the observed AC impedance in on-hook state may even be smaller than that in off-hook state, which naturally makes it impossible to use the above-mentioned principle at least without careful calibration of each SLIC unit both during installation and after any changes in the lines. The author of the patent has acknowledged this fact by using the title "Integrated ringer for short telephone lines" for his patent.

An US Patent No. 4,370,526 to Schoofs et al discloses another circuit arrangement in which the characteristics of the telephone line as seen at the SLIC are monitored.

It is an object of the present invention to present a method and a circuit arrangement for implementing ring trip detection without depending on a DC component in the telephone line. It is also an object of the invention to implement ring trip detection in a cost efficient and reliable way. It is an additional object of the invention to minimise the risk of getting false ring trip indications.

The objects of the invention are achieved by deriving the ring trip indication from observed changes in an electric characteristic internal to the subscriber line interface circuit that feeds a ring signal into the telephone line in which the ring trip is to be detected.

A subscriber line interface circuit according to the invention is characterised in that what is said in the characterising part of the corresponding independent patent claim.

A method for providing ring trip detection according to the invention is characterised in that what is said in the characterising part of the corresponding independent patent claim.

In ringing SLICs there is an amplifier or a pair of amplifiers that amplify an oscillating signal obtained from an oscillator to a level that is high enough to be coupled to the telephone line as a ring signal. Like all amplifiers, these have to be provided with a supply voltage that is the actual source of the energy to be fed into the telephone line during ringing. The supply voltage comes from a supply voltage source, which is typically a DC/DC converter. When the hook switch is closed at the subscriber end, the current drawn from the output(s) of the line amplifier(s) rises. This in turn causes a change in the output of the supply voltage source, the change being related to the internal impedance of the supply voltage source. The change can be detected and used as the basis for providing a ring trip indication.

A convenient way of detecting said change is to couple two low pass filters in parallel to the supply voltage. The time constants of the low pass filters are selected to be sufficiently different so that a rapid change in the supply voltage level causes the output of the "fast" low pass filter to change in a different way than the output of the "slow" low pass filter. A comparator coupled to compare the outputs of the low pass filters gives an indication of such an incident. The output of the comparator is basically the signal carrying the desired ring trip indication.

Several refinements are necessary to make the above-presented principle suitable for practical use. A positive feedback or a corresponding coupling from the ring trip indication signal to the low pass filtering arrangement is advantageous in providing dynamical hysteresis that enables the ring trip detection to be made "on the fly". This means that detection is made reliably even if the duration in time of the detectable condition is very short. A ring on / ring off signal brought as an additional input to the detection arrangement serves as an on/off switching signal that enables detections only when a ring signal is coupled to the telephone line. The incident of the ring on / ring off signal going into the ring off state serves also to acknowledge a generated ring trip indication and to set the ring trip detector back to its original state. Another refinement is the coupling of reference voltages to the low pass filters in order to drive the filtered outputs towards more reasonable ranges of comparator input values.

With a small modification it is possible to make the above-mentioned double filtering approach also sensitive to a "permanent" or very slow change in the level of the supply voltage. This is advantageous, because it provides a fall-back arrangement in a situation where the actual double filtering circuit fails to detect an occurred ring trip due to for example very specific mutual timing of the ring signal and the closing moment of the hook switch. Additionally it is possible to use the output of the ring trip detector as a very fast switching signal that cuts off the ring signal immediately after ring trip has been detected.

The basic measure to be made against false ring trip detections is the careful dimensioning of the detector circuitry. Also other and additional measures are possible; these are typically related to the controlling of the supply voltage value in some kind of synchronism with known changes in the ring signal.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

Fig. 1     illustrates a principle of implementing ring trip detection according to the invention,

Fig. 2     illustrates partly a more detailed implementation of the principle shown in fig. 1,

Fig. 3     illustrates another part of the more detailed implementation of the principle shown in fig. 1,

Fig. 4     illustrates certain interrelations between input and output voltages,

Fig. 5     illustrates a modification to the basic circuit arrangement of fig. 3,

Fig. 6     illustrates another modification to the basic circuit arrangement of fig. 3,

Fig. 7     illustrates still another modification to the basic circuit arrangement of fig. 3 and

Fig. 8     illustrates a method according to an embodiment of the invention.

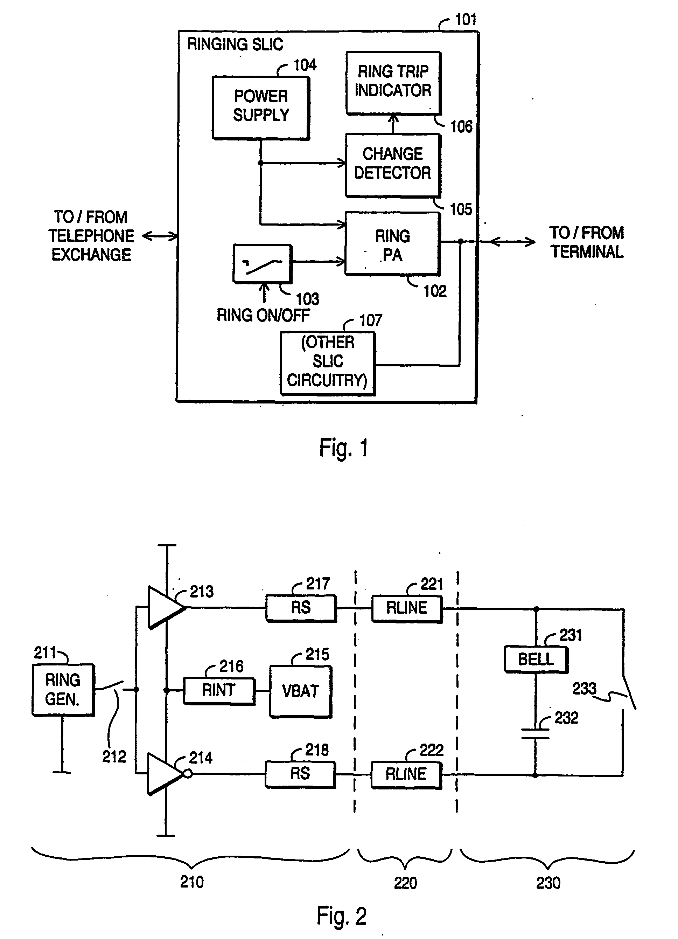

Fig. 1 illustrates schematically a ringing SLIC 101 coupled between a telephone exchange and a subscriber line leading to a subscriber terminal. Within the SLIC 101 there is a ring signal power amplifier unit 102 coupled to the subscriber line and a controllable switch 103 to control the operation of the amplifier unit 102. The signal that controls the state of the switch 103 is the ring on/off signal; during a ring on condition the amplifier unit 102 must deliver a ring signal through the subscriber line to the subscriber terminal, and during a ring off condition it should refrain from coupling anything to the subscriber line. It is not necessary to use a separate switch if the amplifier unit 102 is of a controllable type so that a ring on signal brought to the amplifier sets it into an active state and a corresponding ring off signal sets it into a state in which it does not interfere with the other signals on the subscriber line.

In order to drive the amplifier unit 102 there is a power supply 104 that provides a supply voltage to the amplifier unit 102. According to the invention, a change detector 105 is coupled to monitor the output of the power supply 104. Whether voltage or current (or both) is monitored is irrelevant in scope of the present invention. The change detector 105 is coupled to (or integrated with) a ring trip indicator 106, the task of which is to generate the actual ring trip indication at the moment when a change noticed in the change detector 105 reveals that a hook switch has been closed at the distant end of the subscriber line. The other parts of the SLIC are not of primary importance to the invention, so they are only generally represented in fig. 1 as block 107.

In fact, also other voltages than just the output of the voltage source 104 could be used as the basis for the analysis of changes that indicate a ring trip. The reasoning behind the invention is that no practical voltage source is absolutely ideal; there are always certain impedances internal to the voltage source that cause either permanent changes or at least transient swings both in the internal voltages existing within the voltage source and in the output voltage generated by the voltage source when changes occur in the electrical characteristics of the load that is coupled to the output voltage. Therefore also some voltage (or likewise some current) internal to the power supply 104 or even internal to the amplifier unit 102 could be used as the input to the change detector 105. In the following, however, we will concentrate on a solution the basic structure of which resembles that shown in fig. 1.

Fig. 2 illustrates a circuit arrangement where a ring signal generating part of a SLIC is coupled to a telephone apparatus through a wireline connection. The parts of fig. 2 that are located within a (ringing) SLIC are generally designated with 210, the wireline connection is generally designated as 220 and the parts of fig. 2 that are located within a telephone apparatus or more generally a subscriber terminal are generally designated with 230. If we compare figs. 1 and 2, of the parts shown in fig. 1 only the switch 103, the power supply 104 and the amplifier unit 102 have a representation in fig. 2. The contents of fig. 2 are selected to retain maximal graphical clarity.

A ring signal generator 211, which is typically a freely oscillating low-frequency oscillator at e.g. 25 Hz, is coupled through a switch 212 to the signal inputs of two parallel amplifiers 213 and 214. One of the parallel amplifiers has an inverting output so that the output signals of the amplifiers 213 and 214 are otherwise equal but have a mutual phase difference of $\pi$ radians. The supply voltage for the parallel amplifiers 213 and 214 is taken from a voltage source 215 the internal output impedance of which is explicitly shown in fig. 2 as the impedance element 216 coupled between the output of the voltage source 215 and the supply voltage inputs of the parallel amplifiers 213 and 214. For the sake of example we may assume that the voltage VBAT generated by the voltage source 215 is negative with reference to the ground potential, which constitutes the other pole of the supply voltages to the parallel amplifiers 213 and 214. The output of the first amplifier 213 is coupled through a first serial impedance 217 to a first wire of the wireline connection 220 and the (inverted) output of the second amplifier 214 is coupled through a second serial impedance 218 to a second wire of the wireline connection 220. The inherent impedances of the wires of the wireline connection 220 are shown as the impedance elements 221 and 222 coupled in series with the first and second serial impedances 217 and 218 respectively.

Within the subscriber terminal 230 there is a ringing bell 231 coupled, together with a series capacitance 232, across the wireline connection 230. In parallel with the ringing bell 231 + series capacitance 232 connection there is the hook switch 233, which is in an open state when the subscriber terminal is in passive state (the handset is on the hook) and in a closed state when the subscriber terminal is in active state (the handset is off the hook).

In a typical ringing SLIC there is additionally a reference voltage VREF coupled to the signal input of the parallel amplifiers 213 and 214. The reason of using such a reference voltage is the need for centering the output voltages of the parallel amplifiers 213 and 214 to a certain value. For the sake of graphical clarity the coupling used to generate and deliver such a reference voltage to the parallel amplifiers 213 and 214 is omitted in fig. 2. We may assume that the (constant) amplification factor of the parallel amplifiers 213 and 214 for the actual input voltage VIN obtained from the ring signal generator 211 is k. The value of k is usually stabilised through a local negative feedback coupling or the like and is at least 10 but not more than 50. For example, we may assume that the value of k is 16. It is common practice to make the amplification factor for the reference voltage VREF different than that used for the actual input voltage VIN ; here we may assume that the amplification factor for the reference voltage VREF is (k-1). Using additionally the symbol UA for the time-dependent output voltage of the first amplifier 213 and the symbol UB for the time-dependent output voltage of the second amplifier 214, and noting that the inversion at the output of the latter does not affect the essentially time-invariant reference voltage VREF, we may write the equations

$$UA = (k-1)*VREF + k*VIN$$

$$(1)$$

$$UB = (k-1)*VREF - k*VIN$$

and for the differential output voltage

$$UAB = UA - UB = 2*k*VIN \ .$$

$$(2)$$

The common mode output voltage is similarly

$$UCOMM = 0.5 * (UA+UB) = (k-1) * VREF \ .$$

$$(3)$$

By requiring that

$$VREF = < ( 1 / (2*(k-1)) * VBAT ) > \ ,$$

$$(4)$$

where the notation <...> means time-averaged (i.e. low-pass filtered) voltage value, we note that the common mode voltage obtains the value

$$UCOMM = 0.5 * VBAT \ ,$$

$$(5)$$

which means that the output of the amplifier arrangement consisting of the parallel amplifiers 213 and 214 is centered at the middle of the non-zero supply voltage VBAT and the ground potential.

Note that the above-presented assumption about a negative value of VBAT is by no means limiting to the scope of the present invention, it is presented only because it simplifies certain other solutions in the construction of a SLIC. The value of VBAT could as well be positive, and the voltage source providing the supply voltage to the parallel amplifiers 213 and 214 may well comprise various features of adaptivity, such features being known as such to the person skilled in the art.

Let us now analyse what happens when the ring signal switch 212 has been closed, allowing an amplified ring signal to propagate to the subscriber apparatus 230, and subsequently the hook switch 233 is closed at the subscriber apparatus. The impedance seen by the SLIC 210 at its output to the wireline connection 220 changes when the hook switch is closed, which causes a change in the current drawn from the outputs of the parallel amplifiers 213 and 214. The source of energy from which said current is originally generated is the supply voltage provided by the voltage source 215 through its internal output impedance 216. Therefore, the change in output current from the parallel amplifiers 213 and 214 is reflected in the voltage value observed at their supply voltage inputs. Typically the closing of the hook switch causes a drop in the absolute value of the supply voltage, which in our "negative value of VBAT" example means that the real value of VBAT gets higher (less negative).

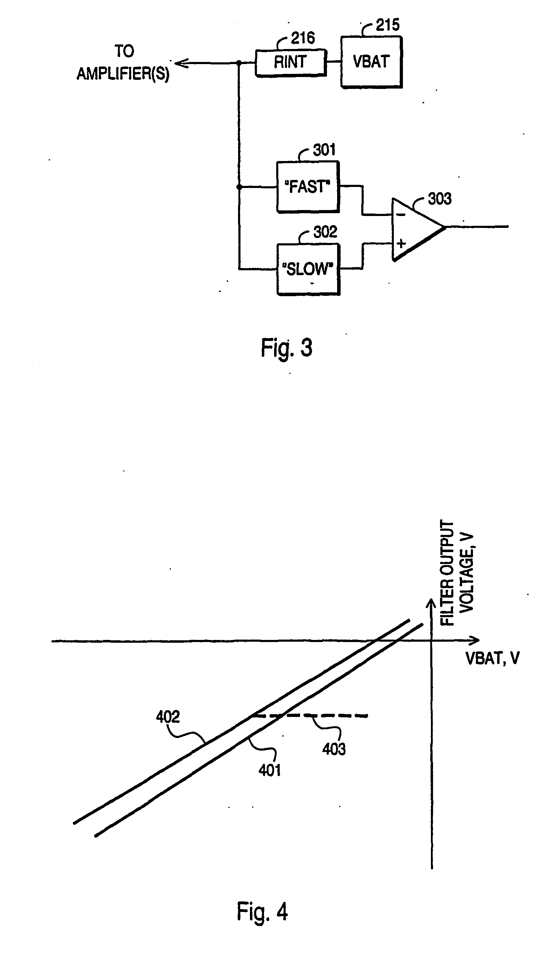

In order to detect said change it is possible to use for example the circuit arrangement schematically illustrated in fig. 3. In addition to being coupled to the amplifiers, the output of the voltage source 215 is coupled, through the internal impedance 216, to the inputs of two low-pass filters 301 and 302. Of these, one low-pass filter 301 is designated as the "fast" low-pass filter 301, which means that the cutoff frequency in its frequency response is remarkably higher than that of the "slow" low-pass filter 302. In other words, a fast transient propagates in a detectable condition through the "fast" low-pass filter 301, while it is essentially blocked from propagating through the "slow" low-pass filter 302. The detailed construction of the low-pass filters is of minor importance to the present invention. They can be for example simple RC filters known as such by the person skilled in the art.

The outputs of the low-pass filters 301 and 302 are coupled to the signal inputs of a differential amplifier 303 which serves as a comparator that gives an output signal only when the difference between the signals brought to its signal inputs exceeds a certain predefined threshold value. In a simple embodiment of the invention we may assume that the differential amplifier 303 is arranged to give an output signal whenever the signal brought to its negative input terminal gets higher than the signal brought to its positive input terminal.

The different frequency responses of the "fast" and "slow" low-pass filters 301 and 302 cause the change in the supply voltage VBAT to be seen differently at the outputs of the "fast" and "slow" low-pass filters 301 and 302. The output of the "fast" low-pass filter 301 exhibits a detectable change of value while the output of the "slow" low-pass filter 302 stays essentially the same or at least changes much more slowly. The resulting difference of the input signals to the differential amplifier 303 gets at least momentarily larger than said predefined threshold value, which makes the differential amplifier 303 to give an output signal that is the ring trip indication signal which was looked for.

For certain purposes that we will analyse later in more detail it is advantageous to design the low-pass filters 301 and 302 so that even under steady-state conditions the outputs obtained therefrom are not exactly the same. Fig. 4 illustrates qualitatively and in an exemplary case the correspondence between an input voltage VBAT and the output voltage of the "fast" low-pass filter, represented by curve 401, as well as the output voltage of the "slow" low-pass filter, represented by curve 402. Both curves relate to steady-state conditions only, excluding any fast changes in the value of VBAT. It is seen that for any given steady-state value of VBAT the output voltage obtained from the "slow" low-pass filter is larger, i.e. less negative, than the output voltage obtained from the "fast" low-pass filter. Such a monotonously behaving difference enables the use of the simple comparator embodiment described above: the real value of the signal brought to the negative input terminal of the differential amplifier 303 stays smaller, i.e. more negative, than the real value of the signal brought to the positive input terminal unless there is a sudden change in VBAT that propagates as a transient through the "fast" low-pass filter 301 and causes its output to rise momentarily higher than the output of the "slow" low-pass filter 302.

Considering an alternative embodiment of the invention where a positive value of VBAT is used, it must be noted that closing the hook switch may actually lower the value of VBAT. In order to make the detection exactly as in the simple "negative value of VBAT" embodiment above, the roles of "slow" and "fast" low-pass filters must be reversed so that under steady-state conditions the "fast" filter gives always a higher value than the "slow" one, and additionally the output of the "fast" filter is coupled to the positive terminal of the differential amplifier and the output of the "slow" filter to the negative terminal thereof. If, for some reason, it is not clear beforehand whether the closing of the hook switch will cause an increase or decrease in the real value of VBAT, the outputs of both filters should remain essentially the same under steady-state conditions and the differential amplifier should be arranged to detect any differences between the filter outputs larger than a certain threshold value, regardless of the sign of the difference. It is within the capabilities of the person skilled in the art to make such modifications to the basic coupling arrangement presented above.

For the sake of simplicity we will remain in the following within the context of a "negative value of VBAT" embodiment of the invention, assuming that the generalisations required to cover also other embodiments are trivial and within the capability of a person skilled in the art to make. Next we will consider certain additions and modifications to the basic principle described so far.

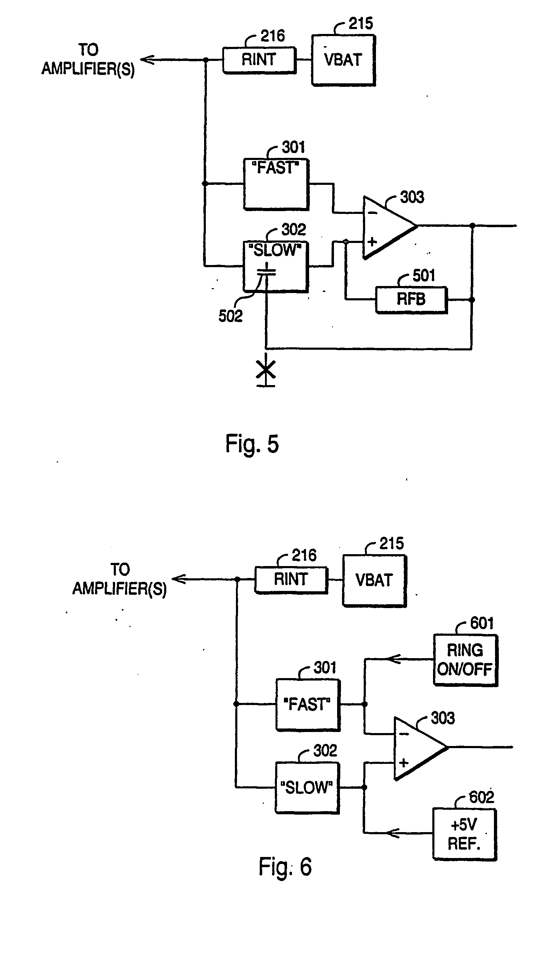

Dynamic hysteresis can be added to the detection circuit in order to make it certain that even a quickly passing change in the value of VBAT that returns immediately to a preceding value is detected and a ring trip indication is given. Fig. 5 illustrates two ways of implementing dynamic hysteresis. The first of them is a positive feedback coupling from the output of the differential amplifier 303 to its positive signal input through a feedback resistor 501. The other one is related to the structure of an RC filter that is used as the "slow" low-pass filter 302. In the known structure of an RC filter there is a capacitor, one end of which is coupled to the ground potential. In fig. 5, however, the terminal in question of capacitor 502 is coupled to the output of the differential amplifier 303. Both of these dynamic hysteresis inducing couplings can be made independently, but it is the opinion of the inventor at the priority date of this patent application that the most effective way of producing dynamic hysteresis is to utilise them both.

Fig. 6 illustrates an additional circuit arrangement that serves several purposes simultaneously. The main principle of fig. 6 is to couple a reference voltage both to the "fast" and to the "slow" low-pass filter. The coupling can as such be made to several alternative points within the filters; fig. 6 shows the reference voltage couplings as made to the outputs of the filters. The reason for using a reference voltage is to bring the output voltage ranges of the filters closer to a usual input voltage range of a differential amplifier. The value of the voltage VBAT in the basic circuit arrangement of fig. 2 can be in the order of -130V or even lower. Although it is possible to make the differential amplifier float in potential so that the location of the input voltages within an absolute voltage scale would not play a role, it is usually convenient in terms of isolation and breakdown discharge prevention to keep the absolute values of the input signals in the order of a few volts.

The requirement of bringing the input voltages of the differential amplifier 303 close to TTL levels could as such be fulfilled by coupling a fixed +5V potential through an appropriate resistive connection to both signal inputs of the differential amplifier, so that the outputs from the low-pass filters would just cause some small changes around the nominal value. However, additional advantages can be obtained by using a fixed potential only for one of the signal inputs, and for the other a changing potential where the changes have a certain meaning. In fig. 6 there is a coupling from a block 601 to the output of the "fast" low-pass filter 301, said block 601 providing a ring on / ring off signal where a +5V level means that the ring signal is on and a lower level like +0V means that the ring signal is off. A fixed +5V potential source 602 is coupled to the output of the "slow" low-pass filter 302.

The ring on / ring off signal brought in fig. 6 to the output of the "fast" low-pass filter 301 serves as an on/off switching signal to the ring trip detection arrangement. namely, when the output of the "fast" low-pass filter 301 receives a low reference voltage level from block 601 it is guaranteed that the voltage at the negative input of the differential amplifier 303 remains below that at the positive input, and no ring trip indications are given. Only when the voltage obtained from block 601 rises to the same (or slightly lower) level than the +5V reference obtained from block 602, the low-pass filters 301 and 302 are "on the same starting line" so that it is their different responses to a common input signal that determines the mutual relations of their outputs and not any external, fixed reference.

The ring on / ring off signal of fig. 6 may even be made to act as the "acknowledgement" signal that makes the ring trip detection arrangement return to a standby state after a successful ring trip detection. Namely, if we assume that the positive feedback described above in association with fig. 5 is used, a successful detection tends to leave the ring trip detection arrangement in a state where a return to normal at the inputs of the low-pass filters is not enough to make the ring trip detection arrangement fall back into a standby state. However, a successful ring trip detection also results in the ring signal being cut off, meaning that the ring on / ring off signal obtained from block 601 goes low. By appropriate dimensioning of the feedback it may be ascertained that the effect of the positive feedback is weaker than that of the ring on / ring off signal obtained from block 601 going low, which means that the latter forces the ring trip detection arrangement back into standby state.

It is possible to modify the basic circuit arrangement also so that it becomes sensitive to a general (steady-state) change of level in the value of VBAT. A simple implementation of this principle is a diode coupled to a separate negative reference voltage. This causes the signal 402 to go along the dashed line 403, i.e. not to rise closer to zero than said negative reference voltage (with the voltage drop across said diode added thereto) even with the value of VBAT increasing above a certain level. The coupling location and orientation of the diode depend in a way obvious as such on whether a "negative value of VBAT" or "positive value of VBAT" embodiment of the invention is used, and whether it is an increase or a decrease in VBAT level which is to be detected.

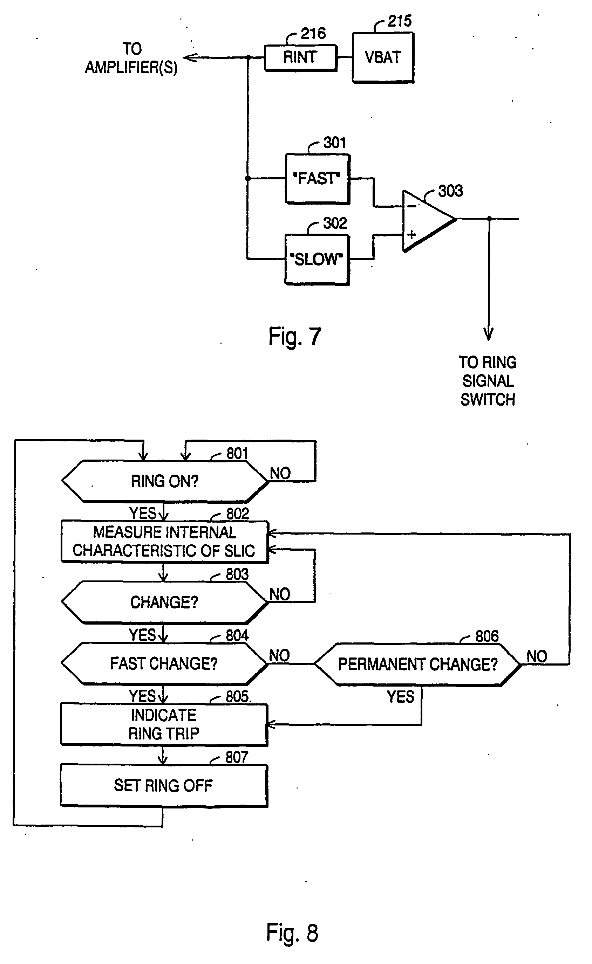

Fig. 7 shows how the output of the differential amplifier 303 can be coupled directly to the switch which determines whether the ring signal is on or off. Previously we have mentioned that it is advantageous to cut off the ring signal as quickly as possible after ring trip has been detected. A local hardware implementation as in fig. 7 instead of software control is about as fast as such cutting off can be. Typically there are, within a SLIC, also other means of telling to the controlling software whether the telephone line is in on-hook or off-hook state. The hardware implementation shown in fig. 7 is so fast in providing ring trip indication that it may become necessary to use it for masking all other on-hook / off-hook indicators as ineffective so that no inconsistency arises among on-hook or off-hook state indicators. The implementation of such masking is within the capability of a person skilled in the art.

The risk of giving false ring trip indications deserves some consideration. Careful dimensioning, which as such is a part of routine workshop experimenting and does not require the use of inventive skill, has a central role in ensuring that the circuit arrangements described so far succeed in detecting an actually occurring ring trip but refrain from giving false indications. However, certain operational conditions may cause more challenging situations for preventing false indications. As an example we consider a situation where the ringing cadence consists of the so-called double ring, e.g. 400 ms of ringing, 200 ms pause, another 400 ms of ringing and thereafter a longer pause. When the short pause between the ringing intervals begins, it may happen that VBAT is left at an extreme value, which in a "negative value of VBAT" embodiment is an extremely negative value. This happens as a consequence of certain functional characteristics of the SLIC as well as the relation of the exact end instant of the first ringing interval to the phase of the oscillating ring signal. The telephone line is in on-hook state and the rest of the SLIC has been coupled off the telephone line, so few dissipative circuit elements exist that could "eat away" the excess energy from the voltage VBAT. Consequently it takes a relatively long time of the VBAT to return to a normal value. However, the pause interval is short and at the beginning of the second ringing interval the phase of the oscillating ringing signal may be such that the ring bell alone at the subscriber apparatus draws a large instantaneous current. This in turn quickly "deflates" the VBAT so that it jumps towards zero, which may cause a false ring trip indication.

Several approaches are available for preventing the above-described type of false indications. A first approach is to either dimension the normal components of the circuit arrangement to be dissipative enough or to arrange for a specific "depletion path" to the output of the voltage source providing the VBAT voltage so that the excess of energy temporarily stored in it is controllably depleted before the next ringing interval begins. Another approach is to actively control the voltage source providing the VBAT voltage so that there exists a connection from the circuit element that drives the ringing/pausing sequence to the element that controls the output voltage of the voltage source providing the VBAT. This connection is used to controllably lower the absolute value of the VBAT voltage during pauses in the sequence. The flip side of the latter approach is that the absolute value of the VBAT voltage is increased for the duration of the actual ringing intervals, which may have positive influence in providing a boost to the ringing. In order to prevent cross-talk between telephone lines it may be advantageous, however, to implement such boosting not instantaneously but according to a ramping function so that the full power of the actual ringing signal is obtained during several tens of milliseconds.

We will conclude by describing a method according to an embodiment of the invention with the help of the flow diagram in fig. 8. Step 801 refers to switching on the ring trip detection arrangement only when a ring signal is on; this means that the SLIC is in a ring on state and not that there would be a ringing interval instead of a pause interval in the ring signal. After it has been determined that the ring signal is on, there is measured an internal electric characteristic of the SLIC at step 802. Previously we have already noted that the invention in its widest sense does not limit the selection of the internal electric characteristic to be measured, as long as it is such where the closing of the hook switch at the distant end of the telephone line causes an abrupt change related to the change of impedance in the telephone line and subscriber apparatus together. The inner loop consisting of steps 802 and 803 is circled in as long as there are no changes observed in the electrical characteristic in concern. If there is a change, there occurs a transition from step 803 to step 804 where it is examined whether the change was fast enough to be a result closing the hook switch. If so, a further transition occurs to step 805 where a ring trip indication is given. If the observed change was not found to be fast, it is further examined in step 806 whether it was permanent. A positive finding at step 806 means that the actual instant of the hook switch going closed has been missed, but apparently the hook switch is closed anyway. Therefore a positive result at step 806 means also a transition to step 805. Otherwise there is a return from step 806 to step 802. After giving the indication at step 805 the ring signal is cut off at step 807 and the initial state is returned to.

The exemplary embodiments of the invention presented in this patent application are not to be interpreted to pose limitations to the applicability of the appended claims. Fort example, although the invention has been described mostly in the context of ringing SLICs, the same principle is applicable even to such architectures where the ring signal generator is coupled to one of a group of telephone lines according to need and where the telephone lines have their own SLICs which themselves are not capable of providing the ringing signal.

The verb "to comprise" is used in this patent application as an open limitation that does not exclude the existence of also unrecited features.

**Claims**

1. A circuit arrangement for detecting ring trip in a subscriber line interface circuit (101, 210) coupled to a subscriber line (220) of a wireline telephone network, the interface circuit comprising:

   - an amplifying output stage (102, 213, 214) for feeding a ring signal into the subscriber line (220) and
   - a supply voltage source (104, 215, 216) for providing a supply voltage to the amplifying output stage (102, 213, 214),

   **characterised in that** it comprises monitoring and detection means (105, 106, 301, 302, 303) for monitoring an electric characteristic internal to the subscriber line interface circuit, said monitoring and detection means (105, 106, 301, 302, 303) being arranged to detect a change in said electric characteristic, to differentiate between a slow change and a fast change detected in said electric characteristic and to give a ring trip indication on the basis of a detected fast change in said electric characteristic.

2. A circuit arrangement according to claim 1, **characterised in that** said monitoring and detection means (105, 106, 301, 302, 303) are arranged to monitor the supply voltage provided by the supply voltage source (104, 215, 216) to the amplifying output stage (102, 213, 214).

3. A circuit arrangement according to claim 2, **characterised in that** the amplifying output stage (102, 213, 214) comprises two parallel amplifiers (213, 214) coupled to receive the same supply voltage from the supply voltage source (104,215,216).

4. A circuit arrangement according to claim 1, **characterised in that** the monitoring and detection means (105, 106, 301, 302, 303) comprises two filtering arrangements (301, 302) coupled in parallel to a coupling point in the subscriber line interface circuit where said electric characteristic is to appear, the frequency response of said two filtering arrangements (301, 302) being different, and comparison means (303) coupled to the outputs of said filtering arrangements (301, 302) for comparing the filtered output signals of said filtering arrangements (301, 302).

5. A circuit arrangement according to claim 4, **characterised in that** the frequency response of one (301) of the two filtering arrangements is of low-pass type having a certain first cutoff frequency, and the frequency response of the other (302) of the two filtering arrangements is of low-pass type having a certain second cutoff frequency which is lower than said first cutoff frequency.

6. A circuit arrangement according to claim 4, **characterised in that** it comprises a positive feedback arrangement (501, 502) from said comparison means (303) to at least one (302) of said two filtering arrangements for providing dynamic hysteresis to the monitoring and detection means.

7. A circuit arrangement according to claim 4, **characterised in that** it comprises at least one reference voltage source (601, 602) coupled to said two filtering arrangements (301, 302) for shifting the signal levels coupled from said two filtering arrangements (301, 302) to said comparison means (303) to a certain range.

8. A circuit arrangement according to claim 7, **characterised in that** it comprises a first reference voltage source (601) coupled to one (301) of the two filtering arrangements and a second reference voltage source (602) coupled to the other (302) of the two filtering arrangements, one (602) of said first and second voltage sources being a fixed reference voltage source and the other (601) of said first and second voltage sources being a changing reference voltage source for acting both as a reference voltage source and an on/off switching signal to the monitoring and detection means.

9. A circuit arrangement according to claim 1, **characterised in that** it comprises a coupling from an output of said monitoring and detection means (105, 106, 301, 302, 303) to a ring signal switch for cutting off the ring signal as a response to a ring trip indication signal provided by said monitoring and detection means (105, 106, 301, 302, 303).

10. A method for detecting ring trip in a subscriber line interface circuit coupled to a subscriber line of a wireline telephone network, comprising the steps of:

   - feeding a ring signal from an amplifying output stage into a subscriber line and
   - providing a supply voltage from a supply voltage source to the amplifying output stage,

   **characterised in that** it comprises the steps of:

   - monitoring (802) an electric characteristic internal to the subscriber line interface circuit,
   - detecting a change (803, 804, 806) in said electric characteristic,
   - determining (804, 806) whether the detected change was a fast change or a slow change and
   - giving a ring trip indication (805) on the basis of a detected fast change in said electric characteristic.

11. A method according to claim 10, **characterised in that** the step of monitoring (802) an electric characteristic internal to the subscriber line interface circuit comprises the step of monitoring the supply voltage supplied to the amplifying output stage by the supply voltage source.

12. A method according to claim 10, **characterised in that** the step of detecting a change (803, 804, 806) in said electric characteristic comprises the steps of

   - filtering the monitored electric characteristic with a first filtering arrangement having a first frequency response,
   - simultaneously filtering the monitored electric characteristic with a second filtering arrangement having a second frequency response, and
   - detecting a fast change when the output of said first filtering arrangement differs from the output of said second filtering arrangement by an amount which is larger than a predefined threshold value.

**Patentansprüche**

1. Schaltungsanordnung zur Erkennung der Rufabschaltung in einem Teilnehmersatz (101, 210), der mit einer Teilnehmerleitung (220) eines drahtlosen Fernsprechnetzwerks gekoppelt ist, wobei der Satz Folgendes umfasst :

- eine Verstärkerausgangsstufe (102, 213, 214) zur Einspeisung eines Ringsignals in die Teilnehmerleitung (220) und
- eine Speisespannungsquelle (104, 215, 216) zum Versorgen der Verstärkerausgangsstufe (102, 213, 214) mit einer Speisespannung,

**dadurch gekennzeichnet, dass** sie Überwachungs- und Erkennungsmittel (105, 106, 301, 302, 303) umfasst zum Überwachen einer elektrischen Kennlinie, die in dem Teilnehmersatz enthalten ist, wobei die Überwachungs- und Erkennungsmittel (105, 106, 301, 302, 303) so angeordnet sind, dass sie eine Veränderung bei der elektrischen Kennlinie erkennen, dass sie zwischen einer langsamen Veränderung und einer schnellen Veränderung, die bei der elektrischen Kennlinie erkannt wurde, unterscheiden und eine Rufabschaltungsmeldung aufgrund einer erkannten schnellen Veränderung bei der elektrischen Kennlinie geben.

2.  Schaltungsanordnung nach Anspruch 1, **dadurch gekennzeichnet, dass** die Überwachungs- und Erkennungsmittel (105, 106, 301, 302, 303) so angeordnet sind, dass die die Speisespannung, mit der die Verstärkerausgangsstufe (102, 213, 214) von der Speisespannungsquelle (104, 215, 216) versorgt wird, überwachen.

3.  Schaltungsanordnung nach Anspruch 2, **dadurch gekennzeichnet**, die Verstärkerausgangsstufe (102, 213, 214) zwei parallele Verstärker (213, 214) umfasst, die gekoppelt sind, um dieselbe Speisespannung von der Speisespannungsquelle (104, 215, 216) zu empfangen.

4.  Schaltungsanordnung nach Anspruch 1, **dadurch gekennzeichnet, dass** das Überwachungs- und Erkennungsmittel (105, 106, 301, 302, 303) zwei Filteranordnungen (301, 302) umfasst, die parallel mit einem Kopplungspunkt in dem Teilnehmersatz gekoppelt sind, in dem die elektrische Kennlinie erscheinen soll, wobei der Frequenzgang der zwei Filteranordnungen (301, 302) unterschiedlich ist, sowie Vergleichsmittel (303), die mit den Ausgängen der Filteranordnungen (301, 302) gekoppelt sind zum Vergleich der gefilterten Ausgangssignale der Filteranordnungen (301, 302).

5.  Schaltungsanordnung nach Anspruch 4, **dadurch gekennzeichnet, dass** der Frequenzgang einer (301) der beiden Filteranordnungen tiefpassartig ist, die eine bestimmte erste Grenzfrequenz aufweist, und dass der Frequenzgang der anderen (302) der beiden Filteranordnungen tiefpassartig ist, die eine bestimmte zweite Grenzfrequenz aufweist, die niedriger ist als die erste Grenzfrequenz.

6.  Schaltungsanordnung nach Anspruch 4, **dadurch gekennzeichnet, dass** sie eine Mitkopplungsanordnung (501, 502) von dem Vergleichsmittel (303) zu mindestens einer (302) der beiden Filteranordnungen umfasst, um die Überwachungs- und Erkennungsmittel mit einer dynamischen Hysterese zu versehen.

7.  Schaltungsanordnung nach Anspruch 4, **dadurch gekennzeichnet, dass** sie mindestens eine Referenzspannungsquelle (601, 602) umfasst, die gekoppelt ist mit den beiden Filteranordnungen (301, 302) zum Verschieben der Signalpegel, die von den beiden Filteranordnungen (301, 302) mit dem Vergleichsmittel (303) zu einem bestimmten Bereich gekoppelt sind.

8.  Schaltungsanordnung nach Anspruch 7, **dadurch gekennzeichnet, dass** sie eine erste Referenzspannungsquelle (601) umfasst, die gekoppelt ist mit einer (301) der beiden Filteranordnungen, und eine zweite Referenzspannungsquelle (602), die gekoppelt ist mit der anderen (302) der beiden Filteranordnungen, wobei eine (602) der ersten und zweiten Spannungsquelle eine feste Referenzspannungsquelle und die andere (601) der ersten und zweiten Spannungsquelle eine sich verändernde Referenzspannungsquelle ist, die sowohl als Referenzspannungsquelle als auch als Ein-/Aus-Schaltsignal für die Überwachungs- und Erkennungsmittel fungiert,

9.  Schaltungsanordnung nach Anspruch 1, **dadurch gekennzeichnet, dass** sie eine Koppelung von einem Ausgang der Überwachungs- und Erkennungsmittel (105, 106, 301, 302, 303) zu einem Ringsignalschalter umfasst zum Ausschalten des Ringsignals als Antwort auf ein Rufabschaltungsmeldungssignal, das von den Überwachungs- und Erkennungsmitteln (105, 106, 301, 302, 303) geliefert wird.

10. Verfahren zum Erkennen der Rufabschaltung in einem Teilnehmersatz, der mit einer Teilnehmerleitung eines drahtlosen Fernsprechnetzes gekoppelt ist, umfassend folgende Schritte:

    - Einspeisen eines Ringsignals von einer Verstärkerausgangsstufe in eine Teilnehmerleitung, und
    - Versorgen der Verstärkerausgangsstufe mit einer Speisespannung von einer Speisespannungsquelle,

**dadurch gekennzeichnet, dass** es folgende Schritte umfasst :

- Überwachen (802) einer elektrischen Kennlinie, die in dem Teilnehmersatz enthalten ist,
- Erkennen einer Veränderung (803, 804, 806) bei der elektrischen Kennlinie,
- Bestimmen (804, 806), ob die erkannte Veränderung eine schnelle Veränderung oder eine langsame Veränderung war, und
- Leisten einer Rufabschaltungsmeldung (805) aufgrund einer erkannten schnellen Veränderung bei der elektrischen Kennlinie.

**11.** Verfahren nach Anspruch 10, **dadurch gekennzeichnet, dass** der Schritt des Überwachens (802) einer elektrischen Kennlinie, die in dem Teilnehmersatz enthalten ist, den Schritt des Überwachens der Speisespannung, das von der Speisespannungsquelle der Verstärkerausgangsstufe zugeführt wird, umfasst.

**12.** Verfahren nach Anspruch 10, **dadurch gekennzeichnet, dass** der Schritt des Erkennens einer Veränderung (803, 804, 806) bei der elektrischen Kennlinie folgende Schritte umfasst :

- Filtern der überwachten elektrischen Kennlinie mit einer ersten Filteranordnung, die einen ersten Frequenzgang aufweist,
- gleichzeitiges Filtern der überwachten elektrischen Kennlinie mit einer zweiten Filteranordnung, die einen zweiten Frequenzgang aufweist, und
- Erkennen einer schnellen Veränderung, der der Ausgang der ersten Filteranordnung sich von dem Ausgang der zweiten Filteranordnung in einer Größenordnung unterscheidet, die größer ist als ein vorgegebener Eckwert.

**Revendications**

**1.** Configuration de circuit de détection de décrochage de combiné dû à une sonnerie d'appel dans un circuit d'interface d'une ligne d'abonné (101, 210) couplé à une ligne d'abonné (220) d'un réseau téléphonique filaire, le circuit d'interface comprenant :

- un étage d'amplification de sortie (102, 213, 214) pour appliquer un signal d'appel à la ligne d'abonné (220) ; et
- une source de tension d'alimentation (104, 215, 216) pour fournir une tension d'alimentation à l'étage d'amplification de sortie (102, 213, 214) ;

**caractérisée en ce qu'**elle comprend des moyens de détection et de surveillance (105, 106, 301, 302, 303) pour surveiller une caractéristique électrique interne au circuit d'interface de la ligne d'abonné, lesdits moyens de détection et de surveillance (105, 106, 301, 302, 303) étant conçus pour détecter un changement de ladite caractéristique électrique, pour distinguer un changement lent et un changement rapide détectés dans ladite caractéristique électrique et pour donner une indication de décrochage de combiné dû à une sonnerie d'appel sur la base d'un changement rapide détecté dans ladite caractéristique électrique.

**2.** Configuration de circuit selon la revendication 1, **caractérisée en ce que** lesdits moyens de détection et de surveillance (105, 106, 301, 302, 303) sont conçus pour surveiller la tension d'alimentation fournie par la source de tension d'alimentation (104, 215, 216) à l'étage d'amplification de sortie (102, 213, 214).

**3.** Configuration de circuit selon la revendication 2, **caractérisée en ce que** l'étage d'amplification de sortie (102, 213, 214) comprend deux amplificateurs parallèles (213, 214) couplés pour recevoir la même tension d'alimentation provenant de la source de tension d'alimentation (104, 215, 216).

**4.** Configuration de circuit selon la revendication 1, **caractérisée en ce que** les moyens de détection et de surveillance (105, 106, 301, 302, 303) comprennent deux configurations de filtrage (301, 302) couplées en parallèle à un point de couplage du circuit d'interface de ligne d'abonné où ladite caractéristique électrique est censée apparaître, la réponse en fréquence desdites deux configurations de filtrage (301, 302) étant différente, et un moyen de comparaison (303) couplé aux sorties desdites configurations de filtrage (301, 302) pour comparer les signaux de sortie filtrés desdites configurations de filtrage (301, 302).

**5.** Configuration de circuit selon la revendication 4, **caractérisée en ce que** la réponse en fréquence de l'une (301) des deux configurations de filtrage est du type passe-bas ayant une certaine première fréquence de coupure, et la réponse en fréquence de l'autre (302) des deux configurations de filtrage est du type passe-bas ayant une certaine deuxième fréquence de coupure qui est inférieure à ladite première fréquence de coupure.

6. Configuration de circuit selon la revendication 4, **caractérisée en ce qu'**elle comprend une configuration de rétroaction positive (501, 502) dudit moyen de comparaison (303) vers au moins une (302) desdites deux configurations de filtrage pour fournir une hystérésis dynamique aux moyens de détection et de surveillance.

7. Configuration de circuit selon la revendication 4, **caractérisée en ce qu'**elle comprend au moins une source de tension de référence (601, 602) couplée auxdites deux configurations de filtrage (301, 302) pour décaler les niveaux de signaux couplés envoyés par lesdites deux configurations de filtrage (301, 302) audit moyen de comparaison (303) vers une certaine gamme.

8. Configuration de circuit selon la revendication 7, **caractérisée en ce qu'**elle comprend une première source de tension de référence (601) couplée à l'une (301) des deux configurations de filtrage et une deuxième source de tension de référence (602) couplée à l'autre (302) des deux configurations de filtrage, l'une (602) desdites première et deuxième sources de tension étant une source de tension de référence fixe et l'autre (601) desdites première et deuxième sources de tension étant une source de tension de référence variable, pour servir à la fois de source de tension de référence, et de signal de commutation marche/arrêt envoyé aux moyens de détection et de surveillance.

9. Configuration de circuit selon la revendication 1, **caractérisée en ce qu'**elle comprend un couplage d'une sortie desdits moyens de détection et de surveillance (105, 106, 301, 302, 303) à un commutateur de signal d'appel pour couper le signal d'appel en réponse à un signal d'indication de décrochage de combiné dû à une sonnerie d'appel émis par lesdits moyens de détection et de surveillance (105, 106, 301, 302, 303).

10. Procédé de détection d'un décrochage de combiné dû à une sonnerie d'appel dans un circuit d'interface d'une ligne d'abonnée couplé à une ligne d'abonné d'un réseau téléphonique filaire, comprenant les étapes consistant à :

   - envoyer un signal d'appel émis par un étage d'amplification de sortie à une ligne d'abonné ; et
   - fournir une tension d'alimentation à partir d'une source de tension d'alimentation à l'étage d'amplification de sortie ;

   **caractérisé en ce qu'**il comprend les étapes consistant à :

   - surveiller (802) une caractéristique électrique interne au circuit d'interface d'une ligne d'abonné ;
   - détecter un changement (803, 804, 806) de ladite caractéristique électrique ;
   - déterminer (804, 806) si le changement détecté est un changement rapide ou un changement lent ; et
   - donner une indication de décrochage de combiné dû à une sonnerie d'appel (805) sur la base d'un changement rapide détecté dans ladite caractéristique électrique.

11. Procédé selon la revendication 10, **caractérisé en ce que** l'étape consistant à surveiller (802) une caractéristique électrique interne au circuit d'interface d'une ligne d'abonné comprend l'étape consistant à surveiller la tension d'alimentation fournie à l'étage d'amplification de sortie par la source de tension d'alimentation.

12. Procédé selon la revendication 10, **caractérisé en ce que** l'étape consistant à détecter un changement (803, 804, 806) dans ladite caractéristique électrique comprend les étapes consistant à :

   - filtrer la caractéristique électrique surveillée avec une première configuration de filtrage ayant une première réponse en fréquence ;
   - filtrer simultanément la caractéristique électrique surveillée avec une deuxième configuration de filtrage ayant une deuxième réponse en fréquence ; et
   - détecter un changement rapide lorsque la différence entre le signal de sortie de ladite première configuration de filtrage et le signal de sortie de ladite deuxième configuration de filtrage est supérieure à une valeur seuil prédéterminée.

**Fig. 1**

**Fig. 2**

Fig. 3

Fig. 4

Fig. 5

Fig. 6

Fig. 7

TO RING
SIGNAL
SWITCH

Fig. 8